# EUROPÄISCHE PATENTSCHRIFT

(11) **EP 2 275 498 B1**
(45) Veröffentlichungstag und Bekanntmachung des Hinweises auf die Patenterteilung: **12.02.2014**
(21) Anmeldenummer: 09171376.8
(22) Anmeldetag: 25.09.2009
(51) Int. Cl.: C09D 5/10, C09D 7/00, C09D 17/00, B05D 5/06, C09C 1/64, C10L 5/32

(54) **Silbereffektfarbe zur Einfärbung von Steinkohlebriketts**
Silver effect colour for colouring coal briquettes
Couleur à effet argenté pour la coloration d'agglomérés de houille

(30) Priorität: 17.07.2009 DE 102009033735
(43) Veröffentlichungstag der Anmeldung: 19.01.2011
(73) Patentinhaber: RWE Power Aktiengesellschaft, 45128 Essen (DE)
(72) Erfinder: Stormanns, Frank, 41849 Wassenberg (DE)
(74) Vertreter: Heine, Christian Klaus

(56) Entgegenhaltungen:
- AU-B2- 601 585
- FR-A- 852 129
- GB-A- 873 232
- GB-A- 1 152 968
- GB-A- 2 305 871
- US-A1- 2006 188 731
- US-B1- 6 312 509

## Beschreibung

Die vorliegende Erfindung betrifft ein Verfahren zur Herstellung einer Färbelösung, die durch dieses Verfahren erhältliche Färbelösung, eine Färbelösung, ein Verfahren zur Herstellung von Kohlenstoff-basierten Formstücken, die durch dieses Verfahren erhältlichen Kohlenstoff-basierten Formstücke sowie die Verwendung einer Färbelösung.

Steinkohlebriketts werden aus zermahlener Steinkohle hergestellt, wobei ein Bindemittel, z. B. Steinkohlenteerpech oder Melasse, verwendet wird. Von Natur aus sind diese Steinkohlebriketts schwarz. Um die Steinkohlebriketts verschiedener Hersteller zu kennzeichnen, ist aus dem Stand der Technik bekannt, diese mit aufgeprägten Schriftzeichen oder anderen Symbolen auf der Oberfläche zu versehen. Der Nachteil einer solchen Kennzeichnung besteht jedoch unter anderem darin, dass diese Kennzeichnung aus größeren Entfernungen wegen des pechschwarzen Erscheinungsbildes der Steinkohlebriketts nicht zu erkennen ist.

GB 2 305 871 A offenbart die Verwendung von einer erste Dispersion enthaltend ein opazitätserhöhendes Mittel wie zum Beispiel Aluminumpartikel und einer zweite Dispersion enthaltend eine Wachsemulsion und eventuell Pigmente zur Kennzeichnung, beim Beschichten der Kohlebriketts.

Der vorliegenden Erfindung lag die Aufgabe zugrunde, die sich aus dem Stand der Technik ergebenden Nachteile im Zusammenhang mit der Kennzeichnung von auf Kohlenstoff basierenden Formstücken, beispielsweise von Steinkohlebriketts, zu überwinden.

Insbesondere lag der vorliegenden Erfindung die Aufgabe zugrunde, eine Kennzeichnung von auf Kohlenstoff basierenden Formstücken, beispielsweise von Steinkohlebriketts, anzugeben, welche im Gegensatz zu einer einfachen Prägung auch von weitem erkannt werden kann. Dabei sollte diese Kennzeichnung die Verbrennungseigenschaften der Formstücke möglichst nicht nachteilig beeinflussen. Insbesondere sollte die Kennzeichnung der Formstücke nicht zu einer Freisetzung unangenehmer Gerüche während der bestimmungsgemäßen Verbrennung der Formstücke führen.

Darüber hinaus lag der vorliegenden Erfindung auch die Aufgabe zugrunde, eine Kennzeichnung von auf Kohlenstoff basierenden Formstücken, beispielsweise von Steinkohlebriketts, anzugeben, welche neben den vorstehend genannten Vorteilen auch eine dauerhafte Kennzeichnung insbesondere dann gewährleistet, wenn die Formstücke in feuchter Atmosphäre, beispielsweise unter freiem Himmel, für längere Zeit gelagert werden. Insbesondere sollte sich bei der Lagerung das Erscheinungsbild der gekennzeichneten Formstücke möglichst nicht, allenfalls jedoch nur geringfügig ändern.

Einen Beitrag zur Lösung der eingangs genannten Aufgaben leistet ein Verfahren zur Herstellung einer Färbelösung zur Färbung von Kohlenstoff-basierten Formstücken, beinhaltend die Verfahrensschritte:
i) Vermischen von Wasser und einem Verdickungsmittel unter Erhalt einer wässrigen Lösung, welche eine nach DIN 53018 bestimmte Viskosität von mindestens 2500 mPa·s, besonders bevorzugt von mindestens 2700 mPa·s, noch mehr bevorzugt von mindestens 2900 mPa·s und am meisten bevorzugt in einem Bereich von 2700 bis 3300 mPa·s aufweist;
ii) Vermischen dieser wässrigen Lösung mit einem Bindemittel und Aluminiumpartikeln unter Erhalt einer Färbelösungs-Vorstufe;
iii) Zugabe von Wasser und gegebenenfalls weiterer Additive zu dieser Färbelösungs-Vorstufe unter Erhalt einer Färbelösung, welche eine nach DIN 53018 bestimmte Viskosität von höchstens 120 mPa·s, besonders bevorzugt von höchstens 110 mPa·s, noch mehr bevorzugt von höchstens 100 mPa·s und am meisten bevorzugt in einem Bereich von 80 bis 100 mPa·s aufweist.

Es hat sich überraschender Weise gezeigt, dass eine Färbelösung, welche durch das vorstehend beschriebene Verfahren erhältlich ist, in ausgezeichneter Weise zur Kennzeichnung von auf Kohlenstoff basierenden Formstücken, wie etwa Steinkohlebriketts, eingesetzt werden kann.

Im Verfahrensschritt i) des erfindungsgemäßen Verfahrens werden zunächst Wasser und ein Verdickungsmittel unter Erhalt einer wässrigen Lösung mit der vorstehend angegebenen Viskosität vermischt. Der Vorteil des Zusatzes eines Verdickungsmittels liegt insbesondere darin, dass auf diese Art und Weise lagerungsstabile Färbelösungen hergestellt werden können, bei denen es bei längerer Lagerung nicht zu einem Entmischen und Absetzen der Aluminiumpartikel kommt.

Als Verdickungsmittel können hierbei grundsätzlich alle dem Fachmann bekannten Verdickungsmittel, welche zur Verdickung wässriger Systeme eingesetzt werden können, verwendet werden. Als Beispiele geeigneter Verdickungsmittel seien etwa Alginsäure, Agar, Carrageen, Johannisbrotkernmehl, Guarkernmehl, Traganth, Gummi arabicum, Xanthan, Karaya, Tarakernmehl, Gellan, Pektin, Zellulose, Zelluloseether, wie beispielsweise Carboxymethylcellulose, Hydroxypropylcellulose, Hydroxypropylmethylcellulose, Methylcellulose oder modifizierte Stärke genannt. Neben diesen, auf natürlichen Polymeren oder modifizierten, natürlichen Polymeren basierenden Verdickungsmittel können auch synthetische Polymere, wie beispielsweise Polyethylenimine, Polyacrylate oder kationische Silikone eingesetzt werden.

Als erfindungsgemäß besonders vorteilhaft haben sich Verdickungsmittel erwiesen, welche Polysaccharide beinhalten, wobei diese Polysaccharide gegebenenfalls modifiziert sein können. In diesem Zusammenhang besonders bevorzugt ist der Einsatz von Xanthangummi als Verdickungsmittel. Xanthangummi ist ein komplexes, langkettiges Polysaccharid mit einem hohen Gehalt an Trisaccharid-Seitenketten, welches als Zuckermonomere Glukose, Mannose und Glucuronsäure im Verhältnis 3 : 3 : 2 enthält und die Struktur einer rechtsdrehenden, fünffachen Helix aufweist. Als Beispiele für ein erfindungsgemäß geeignetes Verdickungsmittel seien beispielsweise die von der Firma CP Kelco, Atlanta, USA, erhältlichen Produkte Keltrol RD^{®}, Kelzan S^{®} oder Kelzan T^{®}, wobei der Einsatz des Produktes Kelzan T^{®} am meisten bevorzugt ist.

Im Zusammenhang mit der Herstellung der wässrigen Lösung im Verfahrensschritt i) ist es weiterhin bevorzugt, dass die wässrige Lösung insbesondere dann, wenn es sich bei dem Verdickungsmittel um Xanthangummi handelt, das Verdickungsmittel in einer Menge in einem Bereich von 0,25 bis 5,0 Gew.-%, besonders bevorzugt in einem Bereich von 0,5 bis 2,5 Gew.-% und am meisten bevorzugt in einem Bereich von 0,75 bis 1,25 Gew.-%, jeweils bezogen auf das Gesamtgewicht der wässrigen Lösung, beinhaltet.

Bei der Herstellung der wässrigen Lösung im Verfahrensschritt i) ist insbesondere darauf zu achten, dass eine möglichst homogene und klumpenfreie Lösung hergestellt wird, wobei eine Homogenisierung mittels geeigneter Rührvorrichtungen, beispielsweise mittels eines Dispergierrührers, sichergestellt wird.

Im Verfahrensschritt ii) des erfindungsgemäßen Verfahrens wird sodann diese wässrige Lösung mit einem Bindemittel und Aluminiumpartikeln unter Erhalt einer Färbelösungs-Vorstufe vermischt, wobei auch hierzu grundsätzlich alle dem Fachmann bekannten Rührvorrichtungen, beispielsweise auch der vorstehend bereits beschriebene Dispergierrührer, eingesetzt werden können. Auch hier ist sicherzustellen, dass es zu einer homogenen Vermischung der Aluminiumpartikel in der Färbelösungs-Vorstufe kommt.

Als Bindemittel, welches im Verfahrensschritt ii) eingesetzt wird, können alle dem Fachmann bekannten und für die Anbindung von Aluminiumpartikeln an die Oberflächen Kohlenstoff-basierter Formkörper geeignet erscheinende Bindemittel eingesetzt werden. Erfindungsgemäß als Bindemittel eingesetzt werden können beispielsweise Poly(meth)acrylsäure, Poly(meth)acrylsäureester, Polystyrol, Styrol/Acrylat-Copolymere, Polyvinylacetat, Vinylacetatcopolymere mit Acrylsäureestern, Vinylacetatcopolymere mit Dibutylmaleinat, oder Vinylacetatcopolymere mit Vinylestern der Versaticsäure. Als erfindungsgemäß besonders vorteilhaft haben sich Polymerdispersionen als Bindemittel erwiesen, in denen das Polymer auf Vinylacetat-Monomeren basiert. In diesem Zusammenhang insbesondere bevorzugt sind Copolymere aus Vinylacetat und einem Vinylester einer Fettsäure. Solche Bindemittel sind beispielsweise unter der Handelsbezeichnung Aldepol^{®} von der Firma Imparat, Hamburg, Deutschland, erhältlich. Als konkretes Beispiel für ein geeignetes Bindemittel sei etwa das Produkt Aldepol^{®} VAV-25 genannt. Derartige Polymerdispersionen weisen üblicherweise einen Feststoffgehalt zwischen 25 und 75 Gew.-%, besonders bevorzugt zwischen 40 und 60 Gew.-%, jeweils bezogen auf das Gesamtgewicht der Polymerdispersion, auf.

Die im Verfahrensschritt ii) eingesetzten Aluminiumpartikel weisen vorzugsweise eine durchschnittliche Partikelgröße in einem Bereich von 1 bis 100 µm, besonders bevorzugt zwischen 5 und 50 µm und am meisten bevorzugt zwischen 10 und 40 µm auf, wobei mit der durchschnittlichen Partikelgröße vorzugsweise das Gewichtsmittel gemeint ist. Weiterhin ist es bevorzugt, dass mindestens 90 Gew.-%, besonders bevorzugt mindestens 95 Gew.-% und am meisten bevorzugt mindestens 98 Gew.-% der Aluminiumpartikel eine Partikelgröße von weniger als 71 µm aufweisen. Die Aluminiumpartikel können dabei grundsätzlich jede beliebige Form aufweisen, wobei der Einsatz in Form von Flocken oder Blättchen ("*Aluminium-Flakes"*) besonders vorteilhaft ist.

Als erfindungsgemäß besonders vorteilhaft hat sich der Einsatz der Aluminiumpartikel in Form einer Paste erwiesen, beinhaltend die Aluminiumpartikel, einen Stabilisator, bei dem es sich beispielsweise um einen phosphororganischen Stabilisator handeln kann, sowie ein Lösungsmittel, bei dem es sich beispielsweise um Testbenzin, Wasser, Butylglykol, Methoxypropanol oder einer Mischung aus mindestens zwei dieser Lösungsmittel handeln kann. Solche Aluminiumpasten sind beispielsweise von der Firma Eckart, GmbH, Wackersdorf, Deutschland, unter den Produktbezeichnungen Stapa^{®} Hydrolac oder Stapa^{®} Hydroxal erhältlich. Als konkrete Beispiele für geeignete Aluminiumpasten seien etwa die Produkte Stap^{®} Hydrolac WH 2, Stapa^{®} Hydrolac PMH 2, Stapa^{®} Hydrolac BGH 2, Stapa^{®} Hydrolac WH 8, Stapa^{®} Hydrolac PMH 8, Stapa^{®} Hydrolac BGH 8, Stapa^{®} Hydroxal WH 2, Stapa^{®} Hydroxal PMH 2, Stapa^{®} Hydroxal BGH 2, Stapa^{®} Hydroxal WH 8, Stapa^{®} Hydroxal PMH 8 und Stapa^{®} Hydroxal BGH 8 genannt, wobei sich insbesondere der Einsatz von Stapa^{®} Hydrolac WH 8 und Stapa^{®} Hydroxal WH 8 als besonders vorteilhaft erwiesen hat. Vorzugsweise weisen diese Aluminiumpasten einen Feststoffgehalt in einem Bereich von 45 bis 85 Gew.-%, besonders bevorzugt von 55 bis 75 Gew.-%, jeweils bezogen auf das Gesamtgewicht der Paste, auf. Grundsätzlich können jedoch auch andere Produkte, wie beispielsweise das unter der Bezeichnung EM SA 70 von der Firma Schlenk, Roth, Deutschland, erhältliche Aluminiumpigment eingesetzt werden.

Insbesondere die Kombination der vorstehend genannten Aluminiumpasten der Stapa^{®} Hydrolac- oder Stapa^{®} Hydroxal-Typen mit einer Dispersion eines Copolymers aus Vinylacetat und einem Vinylester einer Fettsäure, insbesondere mit einer Dispersion des Aldepol^{®}-Typs als Bindemittel ergab ein Farbmittel, welches sich durch eine besonders vorteilhafte Wasserresistenz auszeichnete.

Im Verfahrensschritt iii) des erfindungsgemäßen Verfahrens werden sodann Wasser und weitere Additive zu dieser Färbelösungs-Vorstufe unter Erhalt einer Färbelösung, welche die eingangs angegebene Viskosität aufweist, zugegeben. Der Vorteil, die Aluminiumpartikel zunächst in einer höherviskose Färbelösungs-Vorstufe einzubringen und diese anschließend mit Wasser auf die gewünschte Endviskosität zu verdünnen, besteht insbesondere darin, dass die höhere Viskosität der Färbelösungs-Vorstufe das Dispergieren der Aluminiumpartikel vereinfacht.

Als weitere Additive kommen insbesondere Entschäumungsmittel, Konservierungsmittel, Antioxidantien oder Mischungen aus mindestens zwei dieser Additive in Betracht, wobei insbesondere der kombinierte Einsatz eines Entschäumungsmittels und eines Konservierungsmittels besonders bevorzugt ist.

Als Entschäumungsmittel können wiederum alle dem Fachmann bekannten und für die Anwendung in wässrigen Systemen geeignet erscheinenden Entschäumungsmittel eingesetzt werden, wobei diese Entschäumungsmittel grundsätzlich silikonhaltig oder silikonfrei sein können. Als erfindungsgemäß besonders vorteilhaft haben sich Emulsionen erwiesen, welche auf Paraffinbasierten Mineralölen und weiteren, hydrophoben organischen Komponenten basieren. Als Beispiele geeigneter Entschäumungsmittel seien insbesondere die von der Firma BYK-Chemie GmbH, Wesel, Deutschland, under den Handelsbezeichnungen BYK-036, BYK-190 und BYK-380 vertriebenen Entschäumerzusammensetzungen genannt.

Als Konservierungsmittel können ebenfalls alle dem Fachmann bekannten und für die Anwendung in wässrigen Systemen geeignet erscheinenden Konservierungsmittel eingesetzt werden, wobei insbesondere der Einsatz von Konservierungsmitteln bevorzugt ist, deren Wirksamkeit auf der Bereitstellung von antimikrobiell wirkenden Verbindungen, insbesondere auf der Bereitstellung von Formaldehyd, basiert. Als Beispiel für ein geeignetes Konservierungsmittel sei hier das von der Firma ISP, Paris, Frankreich, unter den Handelsbezeichnungen Bacillat^{®} TK vertriebene Produkt verwiesen.

Im Zusammenhang mit dem erfindungsgemäßen Verfahren ist es insbesondere bevorzugt, dass das Verdickungsmittel, das Bindemittel, die Aluminiumpartikel und das Additiv jeweils in einer solchen Menge eingesetzt werden, dass die im Verfahrensschritt iii) erhaltene Färbelösung
- 0,01 bis 0,5 Gew.-%, besonders bevorzugt 0,05 bis 0,25 Gew.-% und am meisten bevorzugt 0,075 bis 0,125 Gew.-% des Verdickungsmittels, beispielsweise des Produktes Kelzan T^{®},
- 10 bis 30 Gew.-%, besonders bevorzugt 15 bis 25 Gew.-% und am meisten bevorzugt 17,5 bis 22,5 Gew.-% des Bindemittels, beispielsweise des Produktes Aldepol^{®} VAV-25,
- 1 bis 10 Gew.-%, besonders bevorzugt 2,5 bis 7,5 Gew.-% und am meisten bevorzugt 4 bis 6 Gew.-% der Aluminiumpartikel, beispielsweise der in Form der Pasten Stapa^{®} Hydrolac WH 8 und Stapa^{®} Hydroxal WH 8 eingesetzten Aluminiumpartikel, und
- 0,1 bis 1 Gew.-%, insbesondere 0,15 bis 0,5 Gew.-% des Additives, besonders bevorzugt 0,15 bis 0,5 Gew.-%, besonders bevorzugt 0,075 bis 0,25 Gew.-% des Entschäumungsmittels, beispielsweise des Produktes BYK-036, sowie 0,05 bis 0,5 Gew.-%, besonders bevorzugt 0,075 bis 0,25 Gew.-% des Konservierungsmittels, beispielsweise des Produktes Bacillat^{®} TK,

jeweils bezogen auf das Gesamtgewicht der im Verfahrensschritt iii) erhaltenen, wässrigen Lösung, beinhaltet.

Gemäß einer besonderen Ausführungsform es erfindungsgemäßen Verfahrens zur Herstellung einer Färbelösung beinhaltet dieses Verfahren weiterhin den Verfahrensschritt
iv) Einstellen des pH-Wertes der im Verfahrensschritt iii) erhaltenen Färbelösung auf einen Wert in einem Bereich von 4,5 bis 8,5, besonders bevorzugt in einem Bereich von 5,5 bis 7,5 und am meisten bevorzugt in einem Bereich 6 bis 7
wobei zu Einstellung des pH-Wertes dem Fachmann bekannte Basen, wie etwa NaOH, KOH oder NH₃, oder aber dem Fachmann bekannte Säuren, wie etwa HCl oder H₂SO₄, eingesetzt werden können. Werden die vorstehend als bevorzugt angesehenen Komponenten für das Verdickungsmittel, das Bindemittel, die Aluminiumpartikel, das Entschäumungsmittel und das Konservierungsmittel in den vorstehend als bevorzugt angesehenen Mengen eingesetzt, so liegt der pH-Wert der im Verfahrensschritt iii) erhaltenen Färbelösung üblicherweise im saueren Bereich und es erfolgt dann gemäß Verfahrensschritt iv) die Einstellung des pH-Wertes auf einen Wert innerhalb der vorstehend genannten Bereiche durch die Zugabe einer Base, vorzugsweise durch die Zugabe von NaOH, welche vorzugsweise in Form einer wässrigen, insbesondere einer 10 bis 30 gew.-%igen, noch mehr bevorzugt einer 15 bis 25 gew.-%igen Natronlauge eingesetzt wird.

Einen Beitrag zur Lösung der eingangs genannten Aufgaben leistet auch eine Färbelösung, welche durch das vorstehend beschriebene Verfahren erhältlich ist.

Einen Beitrag zur Lösung der eingangs genannten Aufgaben leistet weiterhin eine Färbelösung zur Färbung von Kohlenstoff-basierten Formstücken, beinhaltend als Färbelösungskomponenten
a) 0,01 bis 0,5 Gew.-%, besonders bevorzugt 0,05 bis 0,25 Gew.-% und am meisten bevorzugt 0,075 bis 0,125 Gew.-% eines Verdickungsmittels, wobei das Verdickungsmittel Polysaccharide beinhaltet, die gegebenenfalls modifiziert sein können,
b) 10 bis 30 Gew.-%, besonders bevorzugt 15 bis 25 Gew.-% und am meisten bevorzugt 17,5 bis 22,5 Gew.-% eines Bindemittels in Form einer Polymer-Dispersion, in der das Polymer auf Vinylacetat-Monomeren basiert,
b) 1 bis 10 Gew.-%, besonders bevorzugt 2,5 bis 7,5 Gew.-% und am meisten bevorzugt 4 bis 6 Gew.-% Aluminiumpartikel, welche eine durchschnittliche Partikelgröße in einem Bereich von 1 bis 100 µm aufweisen,
d) 0,1 bis 1 Gew.-%, besonders bevorzugt 0,15 bis 0,5 Gew.-% weiterer Additive ausgewählt aus der Gruppe bestehend aus einem Entschäumungsmittel, einem Konservierungsmittel, einem Antioxidans und einer Mischung aus mindestens zwei dieser Additive, wobei es besonders bevorzugt ist, dass die Färbelösung 0,15 bis 0,5 Gew.-%, besonders bevorzugt 0,075 bis 0,25 Gew.-% eines Entschäumungsmittels sowie 0,05 bis 0,5 Gew.-%, besonders bevorzugt 0,075 bis 0,25 Gew.-% eines Konservierungsmittels enthält,
e) mindestens 60 Gew.-%, besonders bevorzugt mindestens 65 Gew.-% und am meisten bevorzugt mindestens 70 Gew.-% Wasser,
wobei die vorstehend angegebenen Mengenangaben jeweils auf das Gesamtgewicht der Färbelösung bezogen sind.

Bevorzugte Verdickungsmittel, Bindemittel, Aluminiumpartikel, Entschäumungsmittel und Konservierungsmittel sind diejenigen Mittel, die bereits eingangs im Zusammenhang mit dem erfindungsgemäßen Verfahren zur Herstellung einer Färbelösung als bevorzugte Verdickungsmittel, Bindemittel, Aluminiumpartikel, Entschäumungsmittel und Konservierungsmittel benannt worden sind.

Gemäß einer besonderen Ausführungsform der erfindungsgemäßen Färbelösung beinhaltet diese weniger als 10 Gew.-%, besonders bevorzugt weniger als 5 Gew.-% und am meisten bevorzugt weniger als 1 Gew.-% organische Lösungsmittel. Idealerweise ist die erfindungsgemäße Färbelösung im Wesentlichen frei von organischen Lösungsmitteln.

Weiterhin ist es im Zusammenhang mit der erfindungsgemäßen Färbelösung bevorzugt, dass diese einen pH-Wert in einem Bereich von 4,5 bis 8,5, besonders bevorzugt in einem Bereich von 5,5 bis 7,5 und am meisten bevorzugt in einem Bereich 6 bis 7 und eine nach DIN 53018 bestimmte Viskosität von höchstens 120 mPa·s, besonders bevorzugt von höchstens 110 mPa·s, noch mehr bevorzugt von höchstens 100 mPa·s und am meisten bevorzugt in einem Bereich von 80 bis 100 mPa·s aufweist.

Einen Beitrag zur Lösung der eingangs genannten Aufgaben leistet auch ein Verfahren zur Herstellung von Kohlenstoff-basierten Formstücken, auf deren Oberfläche Aluminiumpartikel immobilisiert sind, beinhaltend die Verfahrensschritte:
I) Bereiststellung von Formstücken, welche zu mindestens 50 Gew.-%, besonders bevorzugt zu mindestens 75 Gew.-% und am meisten bevorzugt zu mindestens 90 Gew.-% auf Kohlenstoff basieren;
II) In Kontakt bringen der Oberfläche der Formstücke mit einer durch das erfindungsgemäße Verfahren erhältlichen Färbelösung oder mit der vorstehend beschriebenen, erfindungsgemäßen Färbelösung.

Im Verfahrensschritt I) des erfindungsgemäßen Verfahrens zur Herstellung von Kohlenstoff-basierten Formstücken, auf deren Oberfläche Aluminiumpartikel immobilisiert sind, werden Formstücke bereitgestellt, welche zu mindestens 50 Gew.-%, besonders bevorzugt zu mindestens 75 Gew.-% und am meisten bevorzugt zu mindestens 90 Gew.-% auf Kohlenstoff basieren. Als bevorzugte Formstücke kommen hier insbesondere Kohlebriketts, beispielsweise Braunkohlebriketts, Steinkohlebriketts oder Holzkohlebriketts in Betracht, wobei der Einsatz von Steinkohlebriketts besonders bevorzugt ist. Grundsätzlich können diese Kohlebriketts jede erdenkbare geometrische Form aufweisen, wobei als Beispiele geeigneter Kohlebriketts insbesondere quaderförmige oder eierförmige Briketts genannt seien.

Im Verfahrensschritt II) des erfindungsgemäßen Verfahrens zur Herstellung von Kohlenstoff-basierten Formstücken, auf deren Oberfläche Aluminiumpartikel immobilisiert sind, wird die Oberfläche der Kohlenstoff-basierten Formstücke mit einer durch das erfindungsgemäße Verfahren erhältlichen Färbelösung oder mit der vorstehend beschriebenen, erfindungsgemäßen Färbelösung in Kontakt gebracht, wobei dieses in Kontakt bringen vorzugsweise durch das Besprühen der Kohlenstoff-basierten Formstücke mit der Färbelösung erfolgt. Neben dem Besprühen können die Kohlenstoff-basierten Formstücke auch in die Färbelösung eingetaucht werden. Ist die Oberfläche der Kohlenstoff-basierten Formstücke mit der Färbelösung bedeckt, so ist es weiterhin vorteilhaft, die Kohlenstoff-basierten Formstücke anschließend zu Trocknen, um das Wasser in der Färbelösung zu verdampfen und auf diese Art und Weise die Aluminiumpartikel über das Bindemittel auf der Oberfläche der Kohlenstoff-basierten Formstücke zu immobilisieren. Das Trocknen der mit der Färbelösung in Kontakt gebrachten Kohlenstoff-basierten Formstücke kann durch einfache Lagerung bei Raumtemperatur oder gegebenenfalls auch durch das Erhitzen in einem Ofen erfolgen. Denkbar ist auch,

Kohlenstoff-basierte Formstücke, beispielsweise Kohlebriketts, welche direkt aus dem Herstellungsprozess entnommen werden und daher noch eine Restwärme, beispielsweise eine Temperatur in einem Bereich von 50 bis 100°C aufweisen, mit der Färbelösung in Kontakt zu bringen. Auf diese Weise unterstützt die noch vorhandene Restwärme der Kohlenstoff-basierten Formstücke den Trocknungsprozess.

Die Menge an Färbelösung, welche im Verfahrensschritt II) mit den Kohlenstoff-basierten Formstücken in Kontakt gebracht wird, liegt vorzugsweise in einem Bereich von 0,2 bis 1,5 Gew.-%, besonders bevorzugt von 0,5 bis 1,2 Gew.-% und am meisten bevorzugt in einem Bereich von 0,7 bis 1,0 Gew.-%, jeweils bezogen auf das Gewicht der Kohlenstoff-basierten Formstücke. Der Farbauftrag sollte in so geringem Maße wie möglich erfolgen, da die Farbe im Vergleich zu den Kohlenstoff-basierten Formstücken sehr teuer ist. Die untere Grenze wird letztendlich nur durch den sichtbaren Effekt vorgegeben. Üblicherweise wird eine Färbelösungsmenge von nicht mehr als 4,5 Gew.-%, besonders bevorzugt von nicht mehr als 3,0 Gew.-% und am meisten bevorzugt von nicht mehr als 1,5 Gew.-%, jeweils bezogen auf das Gewicht der Kohlenstoff-basierten Formstücke, eingesetzt.

Einen Beitrag zur Lösung der eingangs genannten Aufgaben leisten auch Kohlenstoff-basierte Formstücke, auf deren Oberfläche Aluminiumpartikel über ein Bindemittel immobilisiert sind, wobei diese Kohlenstoff-basierten Formstücke durch das vorstehend beschriebene Verfahren erhältlich sind.

Einen Beitrag zur Lösung der eingangs genannten Aufgaben leistet auch die Verwendung der durch das erfindungsgemäße Verfahren zur Herstellung einer Färbelösung erhältlichen Färbelösung oder der zuvor beschriebenen, erfindungsgemäßen Färbelösung zur Behandlung der Oberfläche von Formstücken, welche zu mindestens 50 Gew.-%, besonders bevorzugt zu mindestens 75 Gew.-% und am meisten bevorzugt zu mindestens 90 Gew.-% auf Kohlenstoff basieren. Als bevorzugte Formstücke kommen wiederum insbesondere Kohlebriketts, beispielsweise Braunkohlebriketts, Steinkohlebriketts oder Holzkohlebriketts in Betracht, wobei der Einsatz von Steinkohlebriketts besonders bevorzugt ist.

Die Erfindung wird nun anhand eines nicht limitierenden Beispiels näher erläutert.

### Beispiel

Zunächst wird eine wässrige Eindickerlösung durch die Zugabe von 10 g des Verdickungsmittels Kelzan T^{®} in 990 g Wasser hergestellt, wobei ein 1 gew.-%ige Lösung erhalten wird, die eine nach DIN 53018 bestimmte Viskosität von etwa 3000 mPa·s aufwies. Diese Eindickerlösung wird gründlich homogenisiert, wobei sichergestellt wird, dass keine Klumpen des Verdickungsmittels mehr vorhanden sind.

Anschließend werden 75 g der Aluminiumpaste Stapa^{®} Hydroxal WH 8 sowie 200 g des Bindemittels Aldepol^{®} VAV-25 mittels eines Dispergierrührers homogen eingerührt. Anschließend werden 373 g weiteres Wasser, 1 g des Entschäumungsmittels BYK-036 sowie 1 g des Konservierungsmittels Bacillat^{®} TK in die Färbelösung eingerührt.

Mittels einer 20 gew.-%igen Natronlauge wurde der pH-Wert, der nach der vorstehend beschriebenen Herstellung bei etwa 3,5 lag, auf etwa 6,5 eingestellt.

Die auf diese Weise erhaltene Färbelösung, welche durch eine nach DIN 53018 bestimmte Viskosität von etwa 100 mPa·s gekennzeichnet war, wies die folgende Zusammensetzung auf:

| Komponente | Menge in Gew.-% |
|---|---|
| Aldepol^{®} VAV-25 | 20,0 |
| Stapa^{®} Hydroxal WH 8 | 7,5 |
| Kelzan T^{®} | 0,1 |
| BYK-036 | 0,1 |
| Bacillat^{®} TK | 0,1 |
| Natronlauge (20 Gew.-%) | 0,2 |
| Wasser | 72,0 |

Mittels dieser Färbelösung konnten Steinkohlebriketts mit einer silbernen Farbe versehen werden, die sich als äußerst wasserresitent erwies und deren Glanz auch nach längerer Lagerungszeit nicht verloren ging.

Wenn die Färbelösung nicht an dem Ort hergestellt wird, an dem die Färbung der Steinkohlebriketts durchgeführt wird, so kann zur Verringerung von Transportkosten die Färbelösung auch als Konzentrat hergestellt werden, bei dem die vorstehend genannten Komponenten (mit Ausnahme des Wasser) beispielsweise höherer Konzentration, beispielsweise in doppelter Konzentration, enthalten sind.

## Patentansprüche

1. Ein Verfahren zur Herstellung einer Färbelösung zur Färbung von Kohlenstoff-basierten Formstücken, beinhaltend die Verfahrensschritte:
i) Vermischen von Wasser und einem Verdickungsmittel unter Erhalt einer wässrigen Lösung, welche eine nach DIN 53018 bestimmte Viskosität von mindestens 2500 mPa·s aufweist;
ii) Vermischen dieser wässrigen Lösung mit einem Bindemittel und Aluminiumpartikeln unter Erhalt einer Färbelösungs-Vorstufe;
iii) Zugabe vön Wasser und weitere Additive zu die-ser Färbelösungs-Vorstufe unter Erhalt einer Färbelösung, welche eine nach DIN 53018 bestimmte Viskosität von höchsten 120 mPa·s aufweist.

2. Das Verfahren nach Anspruch 1, wobei das Verdickungsmittel Polysaccharide beinhaltet, welche gegebenenfalls modifiziert sein können.

3. Das Verfahren nach Anspruch 2, wobei das Verdickungsmittel Xanthangummi beinhalbet.

4. Das Verfahren nach einem der vorhergehenden Ansprüche, wobei die im Verfahrensschritt i) erhaltene wässrige: Lösung das Verdickungsinittel in einer Menge in einem Bereich von 0,25 bis 5 Gew.-%, bezogen auf das Gesamtgewicht der wässrigen Lösung, beinhaltet.

5. Das Verfahren nach einem der vorhergehenden Ansprüche, wobei das Bindemittel eine Polymer-Dispersion ist, in der das Polymer auf Vinylacetat-Monomeren basiert.

6. Das Verfahren nach Anspruch 5, wobei das Polymer ein Copolymer aus Vinylacetat und einem Vinylester einer Fettsäure ist.

7. Das Verfahren nach einem der vorhergehenden Ansprüche, wobei die Aluminiumpartikel eine durchschnittliche Partikelgröße in einem Bereich von 1 bis 100 µm aufweisen.

8. Das Verfahren nach Anspruch 7, wobei die Aluminiumpartikel in Form einer Paste beinhaltend die Aluminiumpartikel, einen Stabilisator sowie ein Lösungsmittel eingesetzt werden.

9. Das Verfahren nach einem der vorhergehenden Ansprüche, wobei das Additiv ausgewählt ist aus der Gruppe bestehend aus einem Entschäumungsmittel, einem Konservietungsmittel, einem Antioxidans und einer Mischung aus mindestens zwei dieser Additive.

10. Das Verfahren nach einem der vorhergehenden Ansprüche, wobei das Verdickungsmittel, das Bindemittel, die Aluminiumpartikel und das Additiv jeweils in einer solchen Menge eingesetzt werden, dass die im Verfahrensschritt iii) erhaltene Färbelösung 0,01 bis 0,5 Gew.-% des Verdickungsmittels, 10 bis 30 Gew.-% des Bindemittels, 1 bis 10 Gew.-% Aluminiumpartikel und 0,1 bis 1 Gew.-% des Additives, jeweils bezogen auf das Gesamtgewicht der im Verfahrensschritt iii) erhaltenen, wässrigen Lösung, beinhaltet.

11. Das Verfahren nach einem der vorhergehenden Ansprüche, wobei das Verfahren weiterhin den Verfahrensschritt
iv) Einstellen des pH-Wertes der im Verfahrensschritt iii) erhaltenen Färbelösung auf einen Wert in einem Bereich von 4,5 bis 8,5
beinhaltet.

12. Eine Färbelösung zur Färbung von kohlenstoff basierten Formstücken, beinhaltend als Färbelösungskomponenten
a) 0,01 bis 0,5 Gew.-% eines gegebeffenfalls modifizierte Polysaccharide beinhaltenden Verdickungsmittels;
b) 10 bis 30 Gew.-% eines Bindemittels in Form einer PolymerDispersion, in der das Polymer auf Vinylacetat-Monomeren basiert;
c) 1 bis 10 Gew.-% Aluminiumpartikel, welche eine durchschnittliche Partikelgröße in einem Bereich von 1 bis 100 µm aufweisen;
d) 0,1 bis 1 Gew.-% weiterer Additive ausgewählt ans der Gruppe bestehend aus einem Entschäumungsmittel einem Konservierungsmittel, einem Antioxidans und einer Mischung aus mindestens zwei dieser Additive; und
e) mindestens 60 Gew.-% Wasser.

13. Die Färbelösung nach Anspruch 12, wobei die Färbelösung einen pH-Wert in einem Bereich von 4,5 bis 8,5 und eine nach DIN 53018 be-stimmte Viskosität von höchstens 120 mPa·s aufweist.

14. Ein Verfahren zur Herstellung von Kohlenstoff-basierten Formstücken, auf deren Oberfläche Aluminiumpartikel über ein Bindemittel immobilsiert sind, beinhaltend die Verfahrensschritte:
I) Bereitstellung von Formstücken, welche zu mindestens 50 Gew.-% auf Kohlenstoff basiern;
II) In Kontakt bringen der Oberfläche der Formstücke mit einer Färbelösung nach einem der Ansprüche 12 bis 13.

15. Das Verfahren nach Anspruch 14, wobei die Färbelösung in einer Menge in einem Bereich von 0,2 bis 1,5 Gew.-%, bezogen auf das Gewicht der Formistücke, eingesetzt wird,

## Claims

1. A process for preparing a colouring solution for the coloration of shaped, carbon-based pieces, comprising the process steps of:
i) mixing water and a thickener to give aqueous solution having a viscosity of at least 2500 mPa·s as determined by DIN 53018;
ii) mixing this aqueous solution with a binder and particles of aluminium, to give a colouring solution precursor;
iii) adding water and further additives to this colouring solution precursor, to give a colouring solution having a viscosity of not more than 120 mPa·s as determined by DIN 53018.

2. The process according to Claim 1, the thickener comprising polysaccharides which may optionally have been modified.

3. The process according to Claim 2, the thickener comprising xanthan gum.

4. The process according to any of the preceding claims, the aqueous solution obtained in process step i) comprising the thickener in an amount in a range from 0.25 to 5 wt%, based on the total weight of the aqueous solution.

5. The process according to any of the preceding claims, the binder being a polymer dispersion in which the polymer is based on vinyl acetate monomer.

6. The process according to Claim 5, the polymer being a copolymer of vinyl acetate and a vinyl ester of a fatty acid.

7. The process according to any of the preceding claims, the particles of aluminium having an average size in a range from 1 to 100 µm.

8. The process according to Claim 7, the particles of aluminium being used in the form of a paste comprising the aluminium particles, a stabilizer and a solvent.

9. The process according to any of the preceding claims, the additive being selected from the group consisting of a defoaming agent, a preservative, an antioxidant and a mixture of at least two of these additives.

10. The process according to any of the preceding claims, the thickener, the binder, the aluminium particles and the additive each being used in an amount such that the colouring solution obtained in process step iii) comprises 0.01 to 0.5 wt% of the thickener, 10 to 30 wt% of the binder, 1 to 10 wt% of aluminium particles and 0.1 to 1 wt% of the additive, based in each case on the total weight of the aqueous solution obtained in process step iii).

11. The process according to any of the preceding claims, the process further comprising the process step of
iv)adjusting the pH of the colouring solution obtained in process step iii) to a value in a range from 4.5 to 8.5.

12. A colouring solution for the coloration of shaped, carbon-based pieces, comprising as colouring solution components
a) 0.01 to 0.5 wt% of a thickener comprising optionally modified polysaccharides;
b) 10 to 30 wt% of a binder in the form of a polymer dispersion in which the polymer is based on vinyl acetate monomer;
c) 1 to 10 wt% of aluminium particles having an average size in a range from 1 to 100 µm;
d) 0.1 to 1 wt% of further additives selected from the group consisting of a defoaming agent, a preservative, an antioxidant and a mixture of at least two of these additives; and
e) at least 60 wt% of water.

13. The colouring solution according to Claim 12, the colouring solution having a pH in a range from 4.5 to 8.5 and a viscosity of not more than 120 mPa·s as determined by DIN 53018.

14. A method for producing shaped, carbon-based pieces with aluminium particles immobilized on their surface via a binder, comprising the method steps of:
I) providing shaped pieces based to an extent of at least 50 wt% on carbon;
II) contacting the surface of the shaped pieces with a colouring solution according to either of Claims 12 and 13.

15. The method according to Claim 14, the colouring solution being used in an amount in a range from 0.2 to 1.5 wt%, based on the weight of the shaped pieces.

## Revendications

1. Procédé pour la préparation d'une solution de coloration destinée à colorer des pièces moulées à base de carbone, comprenant les étapes de procédé :
i) mélange d'eau et d'un épaississant avec obtention d'une solution aqueuse, qui présente une viscosité, déterminée selon la norme DIN 53018, d'au moins 2500 mPa.s ;
ii) mélange de cette solution aqueuse avec un liant et des particules d'aluminium avec obtention d'un précurseur de solution de coloration ;
iii) addition d'eau et d'autres additifs à ce précurseur de solution de coloration avec obtention d'une solution de coloration, qui présente une viscosité, déterminée selon la norme DIN 53018, d'au plus 120 mPa.s.

2. Procédé selon la revendication 1, l'épaississant comprenant des polysaccharides, qui peuvent le cas échéant être modifiés.

3. Procédé selon la revendication 2, l'épaississant comprenant de la gomme de xanthane.

4. Procédé selon l'une quelconque des revendications précédentes, la solution aqueuse obtenue dans l'étape de procédé i) comprenant l'épaississant en une quantité dans une plage de 0,25 à 5% en poids, par rapport au poids total de la solution aqueuse.

5. Procédé selon l'une quelconque des revendications précédentes, le liant étant une dispersion de polymère, dans laquelle le polymère est à base de monomères d'acétate de vinyle.

6. Procédé selon la revendication 5, le polymère étant un copolymère d'acétate de vinyle et d'un ester de vinyle d'un acide gras.

7. Procédé selon l'une quelconque des revendications précédentes, les particules d'aluminium présentant une grosseur moyenne de particule dans une plage de 1 à 100 µm.

8. Procédé selon la revendication 7, les particules d'aluminium étant utilisées sous forme d'une pâte comprenant les particules d'aluminium, un stabilisant ainsi qu'un solvant.

9. Procédé selon l'une quelconque des revendications précédentes, l'additif étant choisi dans le groupe constitué par un antimousse, un conservateur, un antioxydant et un mélange d'au moins deux de ces additifs.

10. Procédé selon l'une quelconque des revendications précédentes, l'épaississant, le liant, les particules d'aluminium et l'additif étant à chaque fois utilisés en une quantité telle que la solution de coloration obtenue dans l'étape de procédé iii) contient 0,01 à 0,5% en poids de l'épaississant, 10 à 30% en poids du liant, 1 à 10% en poids de particules d' aluminium et 0,1 à 1% en poids de l'additif, à chaque fois par rapport au poids total de la solution aqueuse, obtenue dans l'étape de procédé iii).

11. Procédé selon l'une quelconque des revendications précédentes, le procédé comprenant en outre l'étape de procédé iv) réglage du pH de la solution de coloration obtenue dans l'étape de procédé iii) à une valeur dans une plage de 4,5 à 8,5.

12. Solution de coloration destinée à la coloration de pièces moulées à base de carbone, comportant comme composants de la solution de colorant
a) 0,01 à 0,5% en poids d'un épaississant comprenant des polysaccharides le cas échéant modifiés ;
b) 10 à 30% en poids d'un liant sous forme d'une dispersion de polymère dans laquelle le polymère est à base de monomères d'acétate de vinyle ;
c) 1 à 10% en poids de particules d'aluminium, qui présentent une grosseur moyenne de particule dans une plage de 1 à 100 µm ;
d) 0,1 à 1% en poids d'autres additifs choisis dans le groupe constitué par un antimousse, un conservateur, un antioxydant et un mélange d'au moins deux de ces additifs, et
e) au moins 60% en poids d'eau.

13. Solution de coloration selon la revendication 12, la solution de coloration présentant un pH dans une plage de 4,5 à 8,5 et une viscosité déterminée selon la norme DIN 53018 d'au plus 120 mPa.s.

14. Procédé pour la préparation de pièces moulées à base de carbone, sur la surface desquelles sont immobilisées des particules d'aluminium via un liant, comprenant les étapes de procédé:
I) préparation de pièces moulées qui sont à raison d'au moins 50% en poids à base de carbone ;
II) mise en contact de la surface des pièces moulées avec une solution de coloration selon l'une quelconque des revendications 12 à 13.

15. Procédé selon la revendication 14, la solution colorante étant utilisée en une quantité dans une plage de 0,2 à 1,5% en poids, par rapport au poids des pièces moulées.
